# FASCICULE DE BREVET EUROPEEN

(11) **EP 0 767 142 B1**
(45) Date de publication et mention de la délivrance du brevet: **28.06.2000**
(21) Numéro de dépôt: 96202642.3
(22) Date de dépôt: 20.09.1996
(51) Int. Cl.: C02F 1/52

(54) **Procédé pour éviter la formation de taches noires sur les parois de bassins d'eau enterrés**
Verfahren zum Verhindern von schwarzen Flecken auf Wänden von unterirdischen Wasserbehältern
Process to avoid formation of black spots on the walls of underground water containers

(30) Priorité: 06.10.1995 BE 9500828
(43) Date de publication de la demande: 09.04.1997
(73) Titulaire: PLAVINA & CIE (SOCIETE EN NOM COLLECTIF), 1050 Bruxelles (BE)
(72) Inventeur: Tanghe, Hans, 9700 Oudenaarde (BE)
(74) Mandataire: Dufrasne, Eugène

(56) Documents cités:
- EP-A- 0 394 541

## Description

L'invention concerne un procédé pour éviter la formation de taches noires sur les parois de bassins enterrés, contenant de l'eau contaminée par des ions de cuivre.

Les parois des bassins enterrés, notamment des bassins d'ornement et des bassins de natation sont souvent de couleur claire. Sur les parois de ces bassins contenant de l'eau apparaissent au cours du temps parfois des taches noires ou grisâtres. Ces taches sont généralement indélébiles, même après leur traitement au moyen d'un acide concentré. L'analyse chimique des taches montre qu'elles sont souvent constituées de dépôts comprenant du cuivre, en général sous la forme de sulfure de cuivre.

Ces dépôts de sulfure de cuivre peuvent notamment être dus à une réaction entre des ions de cuivre présents dans l'eau du bassin et du sulfure d'hydrogène formé dans la terre entourant le bassin. En effet, l'eau des bassins enterrés est en général contaminée par des ions de cuivre. Ces ions de cuivre peuvent être présents dans l'eau utilisée pour le remplissage du bassin ou peuvent être introduits dans l'eau ultérieurement, par exemple par la corrosion de pièces en cuivre en contact avec l'eau ou par l'ajout de produits chimiques contenant de faibles quantités de cuivre, pour le traitement de l'eau (tels que des algicides, des désinfectants).

D'autre part, il est connu que, dans la terre entourant les bassins enterrés, ils se développent des micro-organismes anaérobies produisant du sulfure d'hydrogène. Ces micro-organismes peuvent se développer dans des microfissures présentes dans les parois du bassin et le sulfure d'hydrogène formé peut réagir avec les ions de cuivre présents dans l'eau du bassin pour former ainsi du sulfure de cuivre adhérant sur les parois du bassin et formant des taches noires. Dans le cas d'un bassin revêtu d'une membrane d'étanchéité, les micro-organismes anaérobies peuvent se développer entre le bassin et la membrane d'étanchéité et le sulfure d'hydrogène formé peut migrer à travers la membrane et réagir avec les ions de cuivre présents dans l'eau du bassin.

L'invention concerne un procédé qui permet d'éviter cette formation de taches noires sur les parois de bassins enterrés, contenant de l'eau contaminée par des ions de cuivre.

L'invention concerne dès lors un procédé pour éviter la formation de taches noires sur les parois de bassins enterrés contenant de l'eau contaminée par des ions de cuivre, qui se caractérise en ce qu'on traite l'eau au moyen de sulfure de zinc.

Dans le procédé selon l'invention, on entend désigner par les parois de bassins enterrés, toutes les parois, y compris le fond du bassin.

Dans le procédé selon l'invention, on entend désigner par "eau contaminée par des ions de cuivre" de l'eau qui contient plus que 10⁻⁶ mole d'ions de cuivre par litre.

Le sulfure métallique (= sulfure de zinc) mis en oeuvre dans le procédé selon l'invention a pour fonction de réagir avec les ions de cuivre présents dans l'eau du bassin et de faire précipiter les ions de cuivre, en général sous la forme d'un sulfure de cuivre.

Dans le procédé selon l'invention, le sulfure métallique peut se présenter sous n'importe quelle forme. Il peut notamment se présenter sous la forme d'une poudre finement divisée, sous la forme de particules d'un diamètre de l'ordre de quelques micromètres ou même sous la forme de paillettes ou de galets.

Dans le procédé selon l'invention, le traitement de l'eau au moyen du sulfure métallique peut se faire de différentes manières. Le traitement peut consister notamment à déverser le sulfure métallique dans l'eau du bassin ou à disposer le sulfure métallique dans un récipient à parois ajourées, immergé dans l'eau du bassin. Selon un mode de réalisation préféré du procédé selon l'invention, on fait circuler l'eau du bassin sur un lit de particules comprenant le sulfure métallique.

Dans le procédé selon l'invention, la quantité de sulfure métallique mise en oeuvre dépend essentiellement de la concentration en ions de cuivre dans l'eau du bassin. En général, la quantité de sulfure métallique, exprimée en moles de sulfure, est au moins égale à la quantité, en moles, d'ions de cuivre présents dans le bassin. D'une manière préférée, et plus spécialement dans le cas où la concentration en ions de cuivre dans l'eau est susceptible de croître rapidement au cours du temps, le sulfure métallique est mis en oeuvre en excès par rapport à la concentration d'ions de cuivre déjà présents dans l'eau du bassin, par exemple un excès de 10 fois la concentration en ions de cuivre. Selon un mode de réalisation du procédé selon l'invention, et plus spécialement dans le cas dans lequel on fait circuler l'eau du bassin sur un lit de particules comprenant le sulfure métallique, le sulfure métallique est mis en oeuvre initialement dans un très large excès par rapport à la concentration d'ions de cuivre déjà présents dans l'eau du bassin. De cette façon, l'eau du bassin peut être traitée pendant plusieurs mois sans ajout supplémentaire de sulfure métallique.

Selon une variante du procédé de l'invention, le traitement de l'eau au moyen du sulfure métallique est effectué en présence d'un agent floculant. En général, l'agent floculant est sélectionné parmi les hydroxydes et les chlorures d'aluminium et de fer. De préférence, l'agent floculant est un composé mixte de chlorure et d'hydroxyde d'aluminium. L'agent floculant a pour fonction de faire floculer le sulfure de cuivre et de faciliter sa séparation de l'eau. La quantité optimum d'agent floculant va dès lors dépendre de la teneur en ions de cuivre de l'eau et de la nature du sulfure métallique sélectionné. Elle est généralement comprise entre 0,5 et 5 mg par litre d'eau.

Le procédé selon l'invention permet d'éliminer sélectivement les ions de cuivre de l'eau du bassin. Le procédé selon l'invention permet notamment de réduire la quantité d'ions de cuivre à une teneur égale ou inférieure à 10⁻⁶ mole par litre d'eau et évite ainsi la formation de taches noires sur les parois des bassins enterrés.

Le procédé selon l'invention s'applique à tout bassin enterré, et plus spécialement aux bassins comprenant des parois de couleur claire. Le procédé s'applique de manière avantageuse aux bassins revêtus d'une membrane d'étanchéité et plus particulièrement aux bassins revêtus d'une membrane en PVC plastifié.

Le procédé selon l'invention s'applique tout particulièrement aux bassins de natation, et plus spécialement aux bassins de natation revêtus d'une membrane d'étanchéité en PVC. Les membranes d'étanchéité en PVC utilisées dans les bassins de natation sont généralement de couleur bleue, verte, beige ou blanche. Le sulfure de zinc mis en oeuvre est peu toxique pour l'homme et sa solubilité est suffisamment faible pour éviter qu'il colore l'eau ou lui procure l'odeur du sulfure d'hydrogène. L'utilisation de sulfure de zinc permet en outre d'éliminer sélectivement les ions de cuivre sans éliminer d'autres ions utiles tel que le calcium. En outre, l'utilisation du sulfure de zinc ne donne pas lieu à la formation de taches gênants ; en effet, si des dépôts de sulfure de zinc venaient à se former sur les parois des bassins, ces dépôts seraient blancs et, dès lors, peu visibles sur une paroi claire. Ils pourraient par ailleurs être facilement éliminés au moyen d'une solution acide. Dans cette application particulière du procédé selon l'invention, le sulfure de zinc est avantageusement mis en oeuvre dans le circuit hydraulique de désinfection de l'eau, avant le filtre.

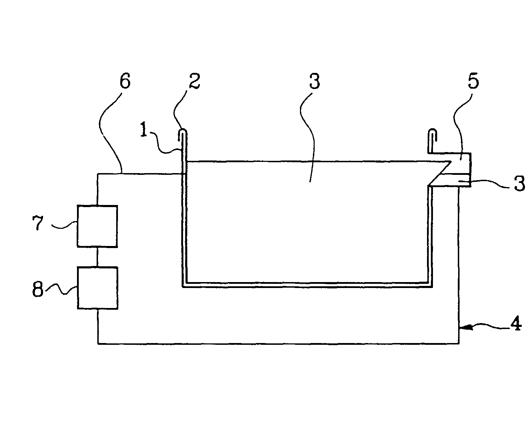

Des particularités et détails de l'invention vont apparaître au cours de la description de la figure annexée qui représente le schéma d'une piscine à laquelle on applique une forme d'exécution préférée du procédé selon l'invention.

La piscine (1) est enterrée et a ses parois revêtues d'une membrane d'étanchéité en PVC (2). La piscine est remplie d'eau (3). La piscine est équipée d'un circuit hydraulique (4) comprenant 1 écumeur (parfois aussi désigné par le terme anglais "skimmer") (5), une buse de refoulement (6), un filtre à sable (7) et une pompe de circulation (8). Le sulfure de zinc est introduit dans l'écumeur (5). Une fraction de l'eau de la piscine est soutirée en continu de la piscine au moyen de la pompe de circulation (8) via l'écumeur (5). Les ions de cuivre présents dans cette fraction d'eau réagissent avec le sulfure de zinc de l'écumeur (5) et précipitent à l'état de sulfure de cuivre, qui est retenu sur le filtre à sable (7). L'eau épurée en ions de cuivre est réinjectée dans la piscine par la buse de refoulement (6).

L'exemple suivant sert à illustrer l'invention.

### Exemple 1 (conforme à l'invention)

Une piscine enterrée, telle que schématisée à la figure décrite ci-dessus, ayant une longueur de 9 m, une largeur de 5 m et une profondeur de 1,5 m et dont les parois ont été revêtues d'une membrane d'étanchéité en PVC de couleur bleue a été remplie de 65 m³ d'eau, ayant une teneur en ions de cuivre de 10⁻⁵ mole/litre.

Le débit d'eau dans le circuit hydraulique (4) a été de 15 m³/h. 100 g de sulfure de zinc ont été introduits dans l'écumeur (5). Après 14 jours, on a relevé une teneur en ions de cuivre dans l'eau de la piscine égale à 10⁻⁶ mole/litre.

Toutes les trois semaines, on a rajouté dans l'écumeur 50 g de sulfure de zinc, ainsi que 200 g d'acide trichloroisocyanurique en tant que désinfectant et 2 g d'agent floculant (sel mixte de chlorure et d'hydroxyde d'aluminium).

Après 24 mois d'emploi de la piscine, aucune tache noire n'est apparue sur les parois.

### Exemple 2 (non-conforme à l'invention)

Après les 24 mois d'emploi de la piscine, tel que décrit à l'exemple 1, le traitement de l'eau au moyen de sulfure de zinc a été arrêté ; les autres conditions de traitement et d'emploi étant maintenues.

Après 12 mois, des taches noires sont apparues graduellement sur les parois. A ce moment, on a relevé une teneur en ions de cuivre dans l'eau de la piscine égale à 5.10⁻⁶ mole/litre.

## Revendications

1. Procédé pour éviter la formation de taches noires sur les parois de bassins enterrés contenant de l'eau contaminée par des ions de cuivre, caractérisé en ce qu'on traite l'eau au moyen de sulfure de zinc.

2. Procédé selon la revendication 1, caractérisé en ce que l'eau du bassin est mise en circulation sur un lit de particules comprenant le sulfure de zinc.

3. Procédé selon la revendication 1, caractérisé en ce que le traitement de l'eau au moyen du sulfure de zinc est effectué en présence d'un agent floculant.

4. Procédé selon la revendication 3, caractérisé en ce que l'agent floculant est un composé mixte de chlorure et d'hydroxyde d'aluminium.

5. Procédé selon l'une quelconque des revendications 1 à 4, appliqué aux bassins revêtus d'une membrane d'étanchéité.

6. Procédé selon la revendication 5, caractérisé en ce que la membrane d'étanchéité est en PVC plastifié.

7. Procédé selon l'une quelconque des revendications 1 à 6, appliqué aux bassins de natation.

## Patentansprüche

1. Verfahren zur Vermeidung der Bildung schwarzer Flecken an den Wänden von in der Erde verlegten Becken, die durch Kupferionen verunreinigtes Wasser enthalten, dadurch gekennzeichnet, dass man das Wasser mittels Zinksulfid behandelt.

2. Verfahren gemäß Anspruch 1, dadurch gekennzeichnet, dass das Wasser des Beckens über ein Teilchenbett, das das Zinksulfid umfasst, umgewälzt wird.

3. Verfahren gemäß einem der Ansprüche 1 bis 2, dadurch gekennzeichnet, dass die Behandlung des Wassers mittels des Zinksulfids in Gegenwart eines Flockungsmittels ausgeführt wird.

4. Verfahren gemäß Anspruch 3, dadurch gekennzeichnet, dass das Flockungsmittel eine gemischte Verbindung aus Aluminiumchlorid und -hydroxid ist.

5. Verfahren gemäß einem der Ansprüche 1 bis 4, angewendet auf Becken, die mit einer Abdichthaut ausgekleidet sind.

6. Verfahren gemäß Anspruch 5, dadurch gekennzeichnet, dass die Abdichthaut aus weichgemachtem PVC besteht.

7. Verfahren gemäß einem der Ansprüche 1 bis 6, angewendet auf Schwimmbecken.

## Claims

1. Method for preventing the formation of black marks on the walls of sunken pools containing water contaminated by copper ions, characterized in that the water is treated using zinc sulfide.

2. Method according to claim 1, characterized in that the water in the pool is circulated over a bed of particles comprising the metal sulfide.

3. Method according to any one of claims 1 or 2, characterized in that the water treatment using metal sulfide is carried out in the presence of a flocculating agent.

4. Method according to claim 5, characterized in that the flocculating agent is a mixed compound of aluminum chloride and aluminum hydroxide.

5. Method according to any one of claims 1 to 6, applied to pools lined with a sealing coat.

6. Method according to claim 7, characterized in that the sealing coat is made of plasticized PVC.

7. Method according to any one of claims 1 to 8, applied to swimming pools.
